# EUROPEAN PATENT SPECIFICATION

(11) **EP 3 868 603 B1**
(45) Date of publication and mention of the grant of the patent: **20.11.2024**
(21) Application number: 19900462.3
(22) Date of filing: 29.11.2019
(51) Int. Cl.: B60P 1/54, F16P 7/02, B60T 7/12, B66C 23/36, B66C 23/88, B60W 30/09, E02F 9/20, E02F 9/26

(54) **WORK VEHICLE**
NUTZFAHRZEUG
VÉHICULE DE TRAVAIL

(30) Priority: 21.12.2018 JP 2018240195
(43) Date of publication of application: 25.08.2021
(73) Proprietor: Tadano Ltd., Takamatsu-shi Kagawa 761-0185 (JP)
(72) Inventor: TANII, Satoshi, Takamatsu-shi Kagawa 761-0185 (JP); TSUDA, Kazuaki, Takamatsu-shi Kagawa 761-0185 (JP)
(74) Representative: Geskes, Christoph
(86) International application number: PCT/JP2019/046769
(87) International publication number: WO 2020/129573

(56) References cited:
- WO-A1-2017/038183
- WO-A1-2018/105741
- JP-A- 2000 247 572
- JP-A- 2000 247 572
- JP-A- 2003 238 077
- JP-A- 2018 024 500
- JP-A- 2018 030 692

## Description

The present invention relates to a work vehicle including a boom protruding forward from a front end of a vehicle body during traveling.

There is a work vehicle including a boom that can be raised and laid down. The boom is laid down during traveling of the work vehicle, and a tip end portion of the boom protrudes forward from a front end of a vehicle body.

Patent Literature 1 discloses a vehicle equipped with a sensor that detects a front side of the vehicle, and a brake control system. The brake control system controls an operation of a brake of the vehicle in accordance with an obstacle in front of the vehicle detected by the sensor.

Patent Literature 2 discloses a safety device consisting of a lower travel body and an upper revolving superstructure rotatably mounted on the lower travel body. The upper revolving superstructure is provided with a boom body capable of freely rising and falling.

Patent Literature 3 discloses a crane that is provided with an obstacle sensor that, during travel, detects the approach of obstacles toward a front side part of a travel body and, during work, detects the approach of obstacles toward a rear side part of a turning body.

Patent Literature 4 discloses a surrounding display device for a traveling crane, whereby the positional relationship between surrounding objects and a boom can be easily understood.

Patent Literature 1: Japanese Patent Laid-Open No. 2018-39303
Patent Literature 2:_ JP 2003 238077 A
Patent Literature 3 : WO 2018 / 105741 A1
Patent Literature 4: WO 2017 / 038183 A1

The inventor of the present application notices that in a work vehicle including a boom, a problem that does not occur in a normal vehicle may occur. Specifically, there is a problem that when the work vehicle including a boom enters an intersection or the like without a traffic light for a left turn and a right turn, a driver of another vehicle travels straight from a lateral side without being aware of the boom protruding forward from a front end of a vehicle body of the work vehicle, and the other vehicle may come into contact with a tip end portion of the boom.

The present invention is made in consideration of the above circumstances, and has an object to provide a means capable of preventing another vehicle from coming into contact with a tip end portion of a boom at the time of entering an intersection or the like.

(1) A work vehicle according to the present invention includes: a vehicle body including wheels; a boom protruding forward from a front end of the vehicle body; a sensor provided at a position corresponding to a tip end portion of the boom, and configured to detect an obstacle on a lateral side of the tip end portion; a brake device configured to apply a braking force to the wheel; and a controller configured to drive the brake device based on detection data received from the sensor.
   The controller drives the brake device based on the detection data received from the sensor that is provided at the tip end portion of the boom and detects an obstacle on the lateral side of the tip end portion of the boom. For example, when the sensor detects a vehicle traveling straight from the lateral side toward the tip end portion of the boom, the controller drives the brake device to stop the vehicle body. Therefore, the work vehicle according to the present invention can prevent another vehicle from coming into contact with the tip end portion of the boom when entering an intersection or the like.
(2) According to the invention the controller may determine whether or not a detected obstacle is approaching the tip end portion of the boom based on the detection data, and drive the brake device according to a determination that the detected obstacle is approaching the tip end portion.
   The controller does not drive the brake device, for example, when the obstacle detected by the sensor is stopped or moves away, and drives the brake device when the obstacle detected by the sensor is approaching the tip end portion of the boom. Therefore, the work vehicle according to the present invention can drive the brake device to stop the vehicle body when another vehicle may come into contact with the tip end portion of the boom. That is, the work vehicle according to the present invention can appropriately stop the vehicle body.
(3) The controller may include a memory. The controller is configured to determine, based on the detection data, whether or not a detected height of a detected obstacle is equal to or greater than a first threshold stored in the memory, and drive the brake device according to the detected height being equal to or greater than the first threshold.
   The controller does not drive the brake device when a detected obstacle is a motorcycle, a person, or an automobile at a height where the obstacle does not come into contact with the boom, and drives the brake device when a detected obstacle is an automobile or the like at a height where the obstacle comes into contact with the boom. Therefore, the work vehicle according to the present invention can stop the vehicle body more appropriately.
(4) The controller may include a memory. The controller is configured to determine, based on the detection data, whether or not a detected distance to a detected obstacle is less than a threshold distance stored in the memory, and drive the brake device according to the detected distance being less than the threshold distance.
   The controller drives the brake device according to the detected distance to the obstacle detected by the sensor being less than the threshold distance. Therefore, the work vehicle according to the present invention can stop the vehicle body more appropriately.
(5) The controller may stop driving of the brake device according to at least one of facts that the sensor no longer detects an obstacle, and an obstacle detected by the sensor moves away.
   When the sensor no longer detects an obstacle, or an obstacle moves away from the vehicle body, the controller stops the driving of the brake device to enable travelling of the vehicle body. Therefore, the brake device is prevented from being driven unnecessarily. As a result, usability of the work vehicle according to the present invention is improved.
(6) The work vehicle according to the present invention may further include a notification device. The controller is configured to cause the notification device to issue a notification according to a determination that the brake device is to be driven.
   The notification device issues a notification after the brake device is driven or before the brake device is driven. Therefore, a driver can easily recognize that the sensor detects an obstacle and the vehicle body is stopped, or that the sensor detects an obstacle and the vehicle body is to be stopped.
(7) The work vehicle according to the present invention may include a sensor configured to detect an obstacle in front of the vehicle body. The controller includes a memory. The controller is configured to drive the brake device according to a height position of a lowest point of an obstacle in front of the vehicle body detected by the sensor being less than a second threshold stored in the memory.

When it is determined that an obstacle in front of the vehicle body detected by the sensor, such as an elevated structure or a viaduct, is coming into contact with the boom, the controller drives the brake device to stop the vehicle body. Therefore, the work vehicle according to the present invention can also travel safely by preventing contact between an obstacle such as an elevated structure and the boom.

The work vehicle according to the present invention can prevent another vehicle from coming into contact with the tip end portion of the boom when entering an intersection or the like.

### Brief Description of Drawings

[Figure 1] Figure 1 is a perspective view of a crane vehicle 10 according to a first embodiment;
[Figure 2] Figure 2 is a schematic plan view of the crane vehicle 10 according to the first embodiment;
[Figure 3] Figure 3 is a functional block diagram of the crane vehicle 10 according to the first embodiment;
[Figure 4] Figure 4 is a flowchart of brake control processing;
[Figure 5] Figure 5 is a schematic plan view of the crane vehicle 10 according to a modification;
[Figure 6] Figure 6 is a functional block diagram of the crane vehicle 10 according to the modification;
[Figure 7] Figure 7 is a flowchart of brake control processing according to the modification;
[Figure 8] Figure 8 is a schematic plan view of the crane vehicle 10 according to a modification;
[Figure 9] Figure 9 is a functional block diagram of the crane vehicle 10 according to a second embodiment; and
[Figure 10] Figure 10 is a flowchart of notification processing according to the second embodiment.

### Description of Embodiments

Hereinafter, preferred embodiments of the present invention will be described with reference to the drawings as appropriate. The embodiments to be described below are merely one aspect of the present invention, and it is needless to say that the embodiments may be modified without departing from the scope of the present invention, defined by the claims.

### [First Embodiment]

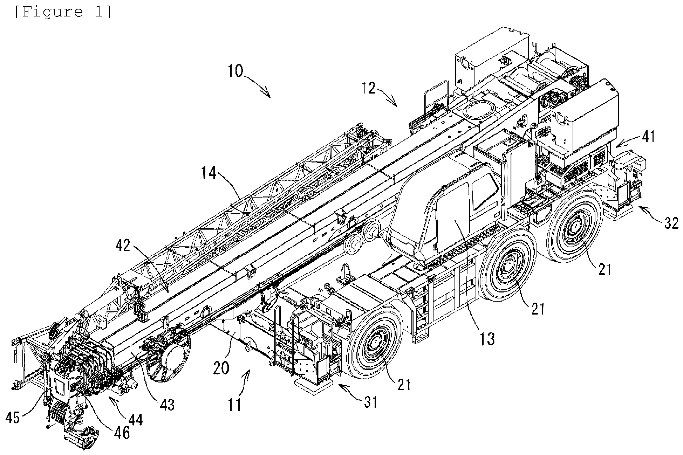

Figure 1 shows a crane vehicle 10 according to the present embodiment. The crane vehicle 10 is an example of a "work vehicle" according to the present invention. However, the work vehicle is not limited to the crane vehicle 10. The work vehicle may include a boom such as a truck crane that can be laid down and whose tip end protrudes forward from a front end of a vehicle body during traveling.

The crane vehicle 10 mainly includes a traveling body 11, and a crane device 12 and a cabin 13 that are mounted on the traveling body 11.

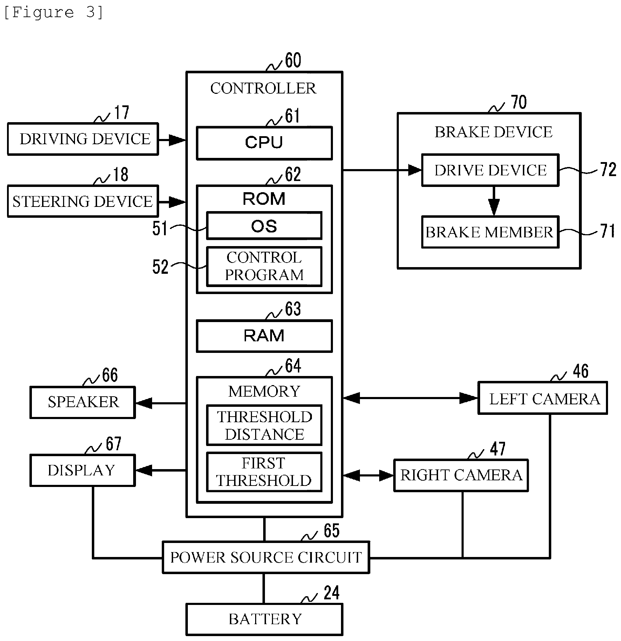

The traveling body 11 includes a vehicle body 20, an axle (not shown) and wheels 21, an engine (not shown), a battery 24 (Figure. 3), and a hydraulic device (not shown).

The axle is rotatably supported by the vehicle body 20. The wheels 21 are held at both ends of the axle. The engine rotationally drives the axle, and rotates the wheels 21 via the axle. In addition, the engine charges the battery 24 (Figure 3). Furthermore, the engine drives a hydraulic pump provided in the hydraulic device. The hydraulic pump discharges hydraulic oil having a predetermined pressure to drive a swing motor or the like to be described later.

As shown in Figure 1, the vehicle body 20 includes a front outrigger 31 and a rear outrigger 32 that stabilize a posture of the vehicle body 20.

The front outrigger 31 is provided at a front portion of the vehicle body 20. The front outrigger 31 includes an outer cylinder, a pair of left and right inner cylinders, an outrigger cylinder, and a pair of right and left jack cylinders. The outer cylinder extends along a width direction of the vehicle body 20. The inner cylinders are inserted into the outer cylinder, and are slidable in the width direction of the vehicle body 20. The outrigger cylinder is supplied with the hydraulic oil by the hydraulic device and expands and contracts so as to slide the inner cylinders. The jack cylinders are fixed to tip ends of the inner cylinders, respectively. The jack cylinder is supplied with the hydraulic oil by the hydraulic device, and expands and contracts in a vertical direction.

The rear outrigger 32 is provided at a rear portion of the vehicle body 20. The rear outrigger 32 has the same configuration as the front outrigger 31, and includes an outer cylinder, a pair of left and right inner cylinders, an outrigger cylinder, and a pair of left and right jack cylinders.

As shown in Figure 1, the cabin 13 is mounted on a swing base 41. The cabin 13 includes a driving device 17 (Figure 3) that drives the crane vehicle 10 and a steering device 18 (Figure 3) that steers the crane device 12. That is, the crane vehicle 10 is a work vehicle which is a so-called rough terrain crane, in which driving of the crane vehicle 10 and steering of the crane device 12 are performed in one cabin 13. However, the crane vehicle 10 may be an all-terrain crane including two cabins, a cabin having the driving device 17 and a cabin having the steering device 18.

In addition, the cabin 13 includes a display 67 (Figure 3) that displays an operation state and images captured by cameras 46 and 47 to be described later. The display 67 is provided in the cabin 13 at a position where a driver seated in a driver seat can easily see the display 67. The display 67 is connected to a controller 60 (Figure 3) to be described later by a cable (not shown). The display 67 displays image data received from the controller 60.

In addition, the cabin 13 includes a control box (not shown). The control box houses a control substrate. The control substrate is equipped with a microcomputer, a resistor, a capacitor, a diode, and various ICs, and constitutes the controller 60 and a power source circuit 65 shown in Figure 3. In addition, a speaker 66 that outputs a sound is mounted on the control substrate. The speaker 66 outputs a sound corresponding to a sound signal received from the controller 60. The speaker 66 and the display 67 are examples of a "notification device" in the present invention. The controller 60 and the power source circuit 65 will be described later.

As shown in Figure 1, the crane device 12 includes the swing base 41 rotatably supported by the vehicle body 20, and a boom 42 supported by the swing base 41. The boom 42 includes a base end boom 43, a single or a plurality of intermediate booms 44, and a tip end boom 45. The base end boom 43, the intermediate booms 44, and the tip end boom 45 are arranged in a nested manner, and the boom 42 can be expanded and contracted. The base end boom 43 is supported by the swing base 41 so as to be raised and laid down. That is, the boom 42 can be raised and laid down, and can be expanded and contracted.

The boom 42 is reduced and laid down during traveling of the crane vehicle 10. Hereafter, a posture of the boom 42 during the traveling will be described as a retracted posture. Figure 1 shows the crane vehicle 10 in a state in which the boom 42 is in the retracted posture. A tip end portion of the boom 42 in the retracted posture protrudes forward from the front end of the vehicle body 20.

The crane device 12 further includes the swing motor, a derricking cylinder by which the boom 42 is raised and laid down, and a telescopic cylinder that expands and contracts the boom 42.

The swing motor is provided on the vehicle body 20. The swing motor is rotated by being supplied with the hydraulic oil from the hydraulic device described above, and rotates the swing base 41 via a known gear.

The derricking cylinder is provided at the swing base 41. The telescopic cylinder is provided at the boom 42. The derricking cylinder and the telescopic cylinder are supplied with the hydraulic oil from the hydraulic device so as to expand and contract. The boom 42 is raised and laid down by the derricking cylinder that expands and contracts. The boom 42 is expanded and contracted by the telescopic cylinder that expands and contracts.

A jib 14 is attached to the boom 42. The jib 14 is attached to a side surface (a right side surface in an example shown in Figure 1) of the boom 42 when the crane vehicle 10 travels, and is attached to the tip end portion of the boom 42 when the crane device 12 is operated. However, a presence or absence of the jib 14 is optional.

The crane vehicle 10 has a system that prevents another vehicle from coming into contact with a tip end of the boom 42 when entering an intersection or the like. The system includes a brake device 70 provided in the traveling body 11, the left camera 46 and the right camera 47, and the controller 60 and the power source circuit 65. The details will be described below.

The brake device 70 includes a brake member 71, and a drive device 72 that operates the brake member 71.

The brake member 71 is a member that directly or indirectly applies a load (braking force) to the wheels 21 or the axle to prevent or stop rotation of the wheels 21 or the axle. The brake member 71 is, for example, a brake pad of a so-called disc brake or a shoe of a so-called drum brake. However, the brake member 71 is not limited to the brake pad or the shoe as long as the brake member 71 can prevent or stop the rotation of the wheels 21 or the axle.

The drive device 72 presses the brake member 71 against a disc or a drum to prevent the rotation of the wheels 21 or the axle. The drive device 72 is, for example, an actuator such as a hydraulic cylinder operated by a hydraulic pressure, a hydraulic motor, a pneumatic cylinder operated by a pneumatic pressure, an electric motor, or an electric cylinder. In addition, the drive device 72 may be an electromagnet that generates a magnetic field. The drive device 72 presses the brake member 71 having at least a part of a magnetic material against the disc or the drum by the generated magnetic field.

When the drive device 72 is a hydraulic cylinder or a hydraulic motor, the controller 60 controls driving of the drive device 72 by inputting a control signal to a solenoid valve provided in the hydraulic device. In addition, when the drive device 72 is an electric motor or an electric cylinder, the controller 60 controls the driving of the drive device 72 by inputting a control signal to a switching element provided in the drive device 72. Furthermore, when the drive device 72 is an electromagnet, the drive device 72 includes an exciting coil. The exciting coil is energized by a drive circuit of the switching element. The controller 60 controls the driving of the drive device 72 by inputting a control signal to the switching element of the drive circuit. That is, the driving of the drive device 72 is controlled by the controller 60. The controller 60 outputs a control signal, and thus the brake member 71 is pressed against the disc or the drum to stop the wheels 21.

The brake member 71 may be pressed against the disc or the drum in conjunction with a brake pedal (not shown) provided in the cabin 13 in addition to the drive device 72. That is, the brake member 71 is automatically pressed against the disc or the drum by the controller 60, and is manually pressed against the disc or the drum by the driver.

The left camera 46 and the right camera 47 (hereinafter also referred to as the cameras 46 and 47) shown in Figure 3 each include an imaging element, and generate and output image data by performing imaging (image capturing). The cameras 46 and 47 are connected to the power source circuit 65 and the controller 60 (Figure 3) by cables (not shown). The cameras 46 and 47 are driven by being supplied with power from the power source circuit 65, and receive a control signal from the controller 60 to perform imaging. The image data output by the cameras 46 and 47 is input to the controller 60 through the cables. The image data is an example of "detection data" in the present invention.

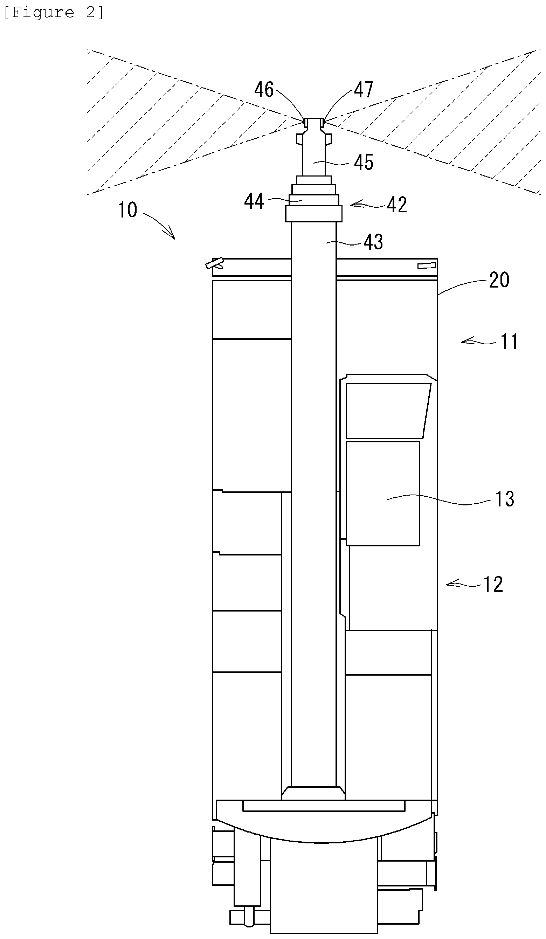

As shown in Figure 2, the cameras 46 and 47 are provided at the tip end portion of the boom 42. Specifically, the left camera 46 is fixed to a left side surface of a tip end portion of the tip end boom 45. A lens of the left camera 46 faces a left side of the vehicle body 20. That is, the left camera 46 images the left side of the tip end portion of the boom 42. The right camera 47 is fixed to a right side surface of the tip end portion of the tip end boom 45. A lens of the right camera 47 faces a right side of the vehicle body 20. That is, the right camera 47 images the right side of the tip end portion of the boom 42.

The cameras 46 and 47 each include a distance measuring sensor and a motor that realize an automatic focusing function. The distance measuring sensor is an ultrasonic sensor, a laser sensor, or the like, detects a distance to an obstacle (subject), and outputs distance data indicating a detected distance. The motor moves the lens or the like to adjust a focal length. Each of the cameras 46 and 47 drives the motor such that a distance indicated by the distance data output by the distance measuring sensor and the focal length are the same distance. In addition, the cameras 46 and 47 output the distance data together with the image data generated by imaging. The output distance data is input to the controller 60 through the cables. The cameras 46 and 47 correspond to a "sensor" in the present invention. The distance data is an example of the "detection data" in the present invention.

The power source circuit 65 shown in Figure 3 is a circuit that generates power to be supplied to the display 67, the cameras 46 and 47, and the drive device 72. The power source circuit 65 is, for example, a DC-DC converter. The power source circuit 65 converts a DC voltage supplied from the battery 24 into a stable DC voltage having a predetermined voltage value and outputs the stable DC voltage. For example, the power source circuit 65 converts a DC voltage of such as 12 V or 24 V supplied from the battery 24 into a stable DC voltage of such as 3.3 V, 5 V, or 12 V and outputs the stable DC voltage. The power source circuit 65 is, for example, a switching regulator including a switching element. The controller 60 controls driving of the display 67 and the cameras 46 and 47 by inputting a control signal to the switching element of the power source circuit 65 or outputting a signal for turning on and off a switch provided between an output terminal of the power source circuit 65 and the display 67 or the cameras 46 and 47.

The controller 60 includes a CPU 61, which is a central processing unit, a ROM 62, a RAM 63, and a memory 64.

The ROM 62 stores an OS 51, which is an operation system, and a control program 52. The control program 52 is executed by the CPU 61 executing an instruction described in an address. The control program 52 executes brake control processing which will be described later.

The RAM 63 is used to execute the control program 52. The memory 64 stores data necessary for executing the control program 52. Specifically, the memory 64 stores a threshold distance and a first threshold.

### [Brake Control Processing]

The control program 52 executes, based on the image data received from the cameras 46 and 47, the brake control processing for controlling the driving of the drive device 72. Hereafter, the processing executed by the control program 52 is described as processing executed by the controller 60.

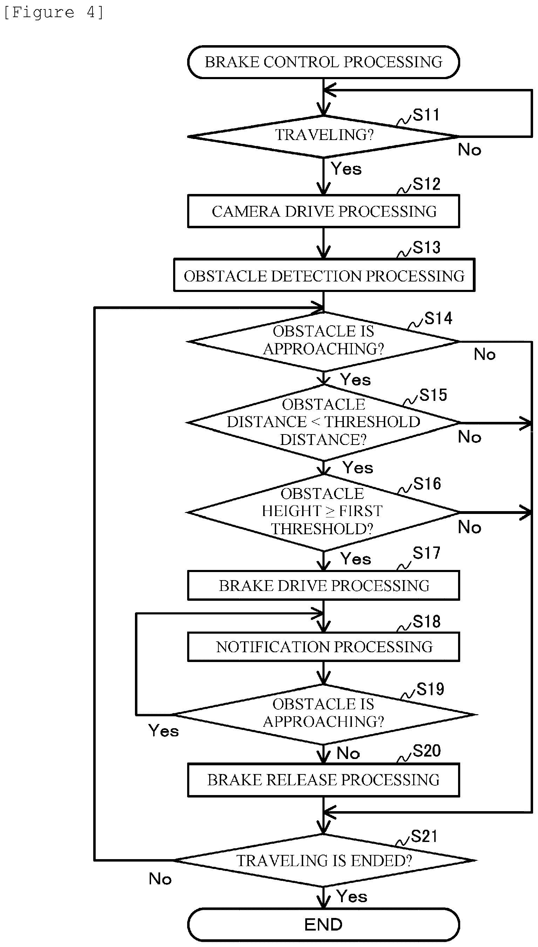

As shown in Figure 4, the controller 60 determines whether or not the crane vehicle 10 is traveling (S11), and executes processing of step S12 and subsequent steps when it is determined that the crane vehicle 10 is traveling (S11: Yes). That is, the brake control processing is executed when the crane vehicle 10 is traveling. For example, the controller 60 determines that the crane vehicle 10 is not traveling according to a fact that the engine is not driven or the crane device 12 is being operated (S11: No). In addition, the controller 60 determines that the crane vehicle 10 is traveling according to facts that the engine is being driven and the crane device 12 is not being operated (S11: Yes).

When it is determined that the crane vehicle 10 is traveling (S11: Yes), the controller 60 executes camera drive processing (S12). Specifically, the controller 60 supplies power to the cameras 46 and 47 by controlling driving of the power source circuit 65, and inputs a control signal to the cameras 46 and 47 to cause the cameras 46 and 47 to perform imaging.

When the control signal is input, each of the cameras 46 and 47 causes the distance measuring sensor to detect a distance to an obstacle (subject), adjusts a focal length according to the distance detected by the distance measuring sensor, and performs imaging. The cameras 46 and 47 each output image data generated by the imaging and the distance (hereinafter referred to as an obstacle distance) detected by the distance measuring sensor. The image data and the obstacle distances output by the cameras 46 and 47 are input to the controller 60. The controller 60 executes obstacle detection processing for detecting an obstacle by analyzing the received image data (S13).

For example, the controller 60 calculates a displacement point at which a color, luminance, or lightness changes by a threshold or more in the received image data. The controller 60 detects a region surrounded by the displacement points as an obstacle. The number of obstacles detected by the controller 60 is one or more. Other existing methods may be used to detect the obstacles. In addition, the controller 60 may determine a subject determined by the cameras 46 and 47 as an obstacle. Furthermore, in order to reduce the number of operations of the CPU 61, binarization processing or the like may be used for the obstacle detection processing.

Next, the controller 60 determines, based on the received obstacle distance, whether or not the detected obstacle is approaching the tip end portion of the boom 42 (S14). Specifically, the controller 60 executes the camera drive processing at the step S12 periodically (for example, at intervals of 0.5 seconds). Then, the controller 60 periodically receives input of the obstacle distance. The controller 60 determines that the obstacle is approaching according to the fact that the obstacle distance decreases over time (S14: Yes). The controller 60 determines that the obstacle is not approaching according to the fact that the obstacle distance increases over time or the obstacle distance does not change over time (S14: No).

When it is determined that the obstacle is not approaching (S14: No), the controller 60 determines whether or not traveling of the crane vehicle 10 is ended (S21). For example, the controller 60 determines that the traveling of the crane vehicle 10 is ended according to a fact that the engine is stopped (S21: Yes), and determines that the traveling of the crane vehicle 10 is not ended according to a fact that the engine is not stopped (S21: No). The controller 60 ends the brake control processing according to a determination that the traveling of the crane vehicle 10 is ended (S21: Yes). Meanwhile, the controller 60 continues to execute processing of step S14 and subsequent steps according to a determination that the traveling of the crane vehicle 10 is not ended (S21: No).

When it is determined in step S14 that the obstacle is approaching (S14: Yes), the controller 60 determines whether or not an obstacle distance of the approaching obstacle is less than the threshold distance stored in the memory 64. The threshold distance is, for example, 5 m to 15 m. That is, the controller 60 determines whether or not a distance to the approaching obstacle is a distance that may cause contact between the boom 42 and the obstacle.

When it is determined that the obstacle distance to the approaching obstacle is not less than the threshold distance (S15: No), the controller 60 skips processing of steps S15 to S20, and executes processing of step S21.

Meanwhile, when it is determined that the obstacle distance to the approaching obstacle is less than the threshold distance (S15: Yes), the controller 60 determines whether or not an obstacle height, which is a height of an obstacle from ground, is equal to or greater than the first threshold stored in the memory 64. Specifically, the controller 60 calculates the obstacle height based on the received image data and obstacle distance, and determines whether or not the calculated obstacle height is equal to or greater than the first threshold. The obstacle height corresponds to a vehicle height when the obstacle is a vehicle. The first threshold is a value corresponding to a height of the tip end portion of the boom 42 in a retracted posture from ground, and is, for example, 1.5 m to 3 m. That is, the controller 60 determines whether or not an obstacle, such as an approaching vehicle, may come into contact with the boom 42.

When it is determined that the obstacle height is not equal to or greater than the first threshold (S16: No), that is, when it is determined that there is no risk that the approaching obstacle comes into contact with the boom 42, the controller 60 skips processing of steps S17 to S20, and executes processing of step S21.

Meanwhile, when it is determined that the obstacle height is equal to or greater than the first threshold (S16: Yes), that is, when it is determined that the approaching obstacle may come into contact with the boom 42, the controller 60 executes the brake drive processing (S17). Specifically, the controller 60 inputs a control signal to the drive device 72 of the brake device 70 to press the brake member 71 against the disc or the drum, so as to stop the wheels 21.

Then, the controller 60 executes notification processing (S18). Specifically, the controller 60 inputs a sound signal to the speaker 66 to cause the speaker 66 to output a warning sound, or inputs image data to the display 67 to cause the display 67 to display a warning screen. The sound signal and the image data output from the controller 60 in the notification processing are stored in the memory 64 in advance.

After executing the processing of step S18, the controller 60 determines whether or not the detected obstacle continues approaching (S19). The determination processing of step S19 is executed in the same manner as the determination processing of step S14.

When it is determined that the obstacle continues approaching (S19: Yes), the controller 60 continues to execute the driving of the drive device 72 of the brake device 70 and the notification processing (S18).

The brake drive processing of step S17 may be executed in a plurality of stages. Specifically, the controller 60 first drives the brake device 70 as a preliminary brake, and then drives the brake device 70 as a main brake when it is determined that the obstacle continues approaching. In the preliminary brake and the main brake, a pressing force for pressing the brake member 71 against the disc or the drum may be changed. For example, in the preliminary brake, the brake member 71 is pressed against the disc or the drum with a pressing force lower than that in the main brake.

When it is determined that the obstacle is not approaching as the obstacle such as a vehicle makes a right or left turn, the obstacle passes an intersection, or the obstacle stops (S19: No), the controller 60 executes brake release processing (S20). Specifically, the controller 60 stops input of the control signal to the drive device 72 of the brake device 70. Then, the controller 60 determines whether or not the traveling of the crane vehicle 10 is stopped (S21), and continues to execute the processing of step S14 and subsequent steps when it is determined that the traveling of the crane vehicle 10 is not stopped (S21: No). When it is determined that the traveling of the crane vehicle 10 is stopped (S21: Yes), the controller 60 ends the brake control processing.

### [Operation and Effect of Embodiment]

The controller 60 drives the brake device 70 based on the image data and the obstacle distance received from the cameras 46 and 47 that are provided at the tip end portion of the boom 42 and detect an obstacle on a lateral side of the vehicle body 20. Therefore, the crane vehicle 10 can prevent another vehicle or the like (obstacle) from coming into contact with the tip end portion of the boom 42 when entering an intersection or the like.

In addition, the controller 60 does not drive the brake device 70 when the detected obstacle is stopped or moves away (S14: No), and drives the brake device 70 when the detected obstacle is approaching (S14: Yes). Therefore, the crane vehicle 10 can drive the brake device 70 to stop the vehicle body 20 when another vehicle or the like (obstacle) may come into contact with the tip end portion of the boom 42. That is, the crane vehicle 10 can appropriately stop the vehicle body 20.

Further, the controller 60 does not drive the brake device 70 when the detected obstacle is a motorcycle, a person, or an automobile at a height where the obstacle does not come into contact with the boom 42 (S16: No), and drives the brake device 70 when the detected obstacle is an automobile or the like at a height where the obstacle comes into contact with the boom 42 (S16: Yes). Therefore, the crane vehicle 10 can stop the vehicle body 20 more appropriately.

Furthermore, when the obstacle is no longer detected, or the obstacle moves away from the boom 42 (S19: No), the controller 60 stops the driving of the brake device 70 (S20) to enable travelling of the crane vehicle 10. Therefore, the brake device 70 is prevented from being driven unnecessarily. As a result, usability of the crane vehicle 10 is improved.

Moreover, the controller 60 executes the notification processing (S18) according to the driving of the brake device 70 (S17). Therefore, the driver can easily recognize that the vehicle body 20 is stopped according to a fact that an obstacle may come into contact with the boom 42.

### [Second Embodiment]

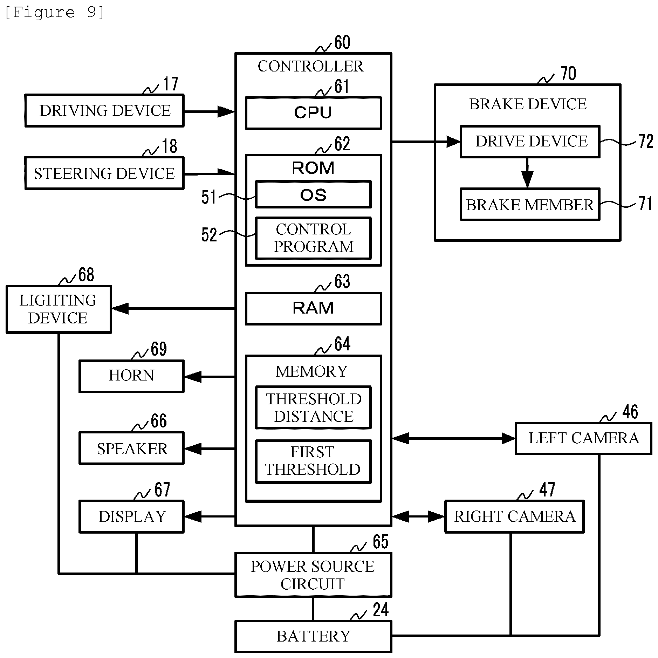

In the first embodiment, an example is described in which the brake device 70 is driven to stop the crane vehicle 10 when an obstacle detected by the cameras 46 and 47 may come into contact with the boom 42. In the present embodiment, an example will be described in which a lighting device 68 and a horn 69 shown in Figure 9 are driven and displayed on the display 67 when an obstacle detected by the cameras 46 and 47 may come into contact with the boom 42. A configuration of the crane vehicle 10 other than the lighting device 68 and the horn 69 in the present embodiment is the same as a configuration of the crane vehicle 10 described in the first embodiment.

The lighting device 68 is, for example, a rotary lamp in which a direction of light to be emitted rotates. The lighting device 68 is provided, for example, at the tip end portion of the boom 42, a tip end portion of a support member (not shown) extending from the traveling body 11 to a position corresponding to the tip end portion of the boom 42, or a front end portion of the traveling body 11. That is, the lighting device 68 is installed at a position that can be visually recognized by a driver of a vehicle approaching the boom 42. The lighting device 68 is turned on by power supplied from the power source circuit 65. For example, the controller 60 turns on and off the lighting device 68 by outputting a control signal for turning on and off a switch provided between the power source circuit 65 and the lighting device 68.

The horn 69 is a device, a speaker, or the like that outputs a horn sound when a pressure is applied. The controller 60 causes the horn 69 to issue a notification of a sound such as a horn sound, for example, by inputting a control signal to a pressing device that applies a pressure to the horn 69 or by inputting a sound signal to the horn 69. The lighting device 68 and the horn 69 are examples of the "notification device" according to the present invention. Only one of the lighting device 68 and the horn 69 may be provided on the crane vehicle 10.

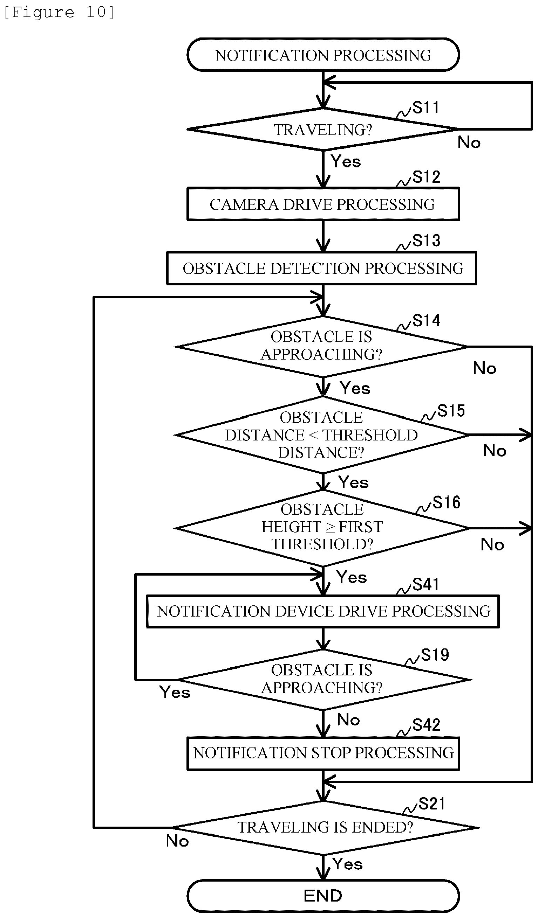

The controller 60 executes notification processing shown in Figure 10 instead of the brake control processing (Figure 4) described in the first embodiment. Hereinafter, the notification processing will be described with reference to Figure 10. The same processing as that of the first embodiment is donated by the same reference numeral (step number) as that of the first embodiment and a description thereof is omitted.

As in the first embodiment, the controller 60 executes the processing from step S11 to step S16. Then, in step S16, the controller 60 determines whether or not the obstacle approaching the threshold distance is an obstacle at a height where the obstacle comes into contact with the boom 42.

When it is determined that the obstacle approaching the threshold distance is an obstacle at a height where the obstacle comes into contact with the boom 42 (S16: Yes), the controller 60 executes notification device drive processing (S41). Specifically, the controller 60 turns on the lighting device 68, causes the horn 69 to output the horn sound, and further causes the display 67 to display that an obstacle is approaching.

Next, the controller 60 determines whether or not the obstacle continues approaching (S19), as in the first embodiment. That is, the controller 60 determines whether or not a driver of an obstacle (vehicle) who detects a danger from lighting of the lighting device 68 or the horn sound stops the vehicle. When it is determined that the obstacle continues approaching (S19: Yes), the controller 60 continues to execute the notification device drive processing. When it is determined that the obstacle is no longer approaching as the obstacle is stopped, turned left or right, retreated, or the like (S19: No), the controller 60 executes notification stop processing (S42). Specifically, the controller 60 turns off the lighting device 68, stops output of the control signal and the sound signal to the horn 69, and further stops displaying of the display 67 that an obstacle is approaching. Thereafter, the controller 60 executes the processing of step S21 as in the first embodiment.

### [Operation and Effect of Second Embodiment]

By executing the notification processing, the crane vehicle 10 can make a driver of a vehicle, which may approach the tip end portion of the boom 42 and come into contact with the tip end portion of the boom 42, recognize that there is a risk of coming into contact with the tip end portion of the boom 42. As a result, safety of the crane vehicle 10 is improved.

### [Modification]

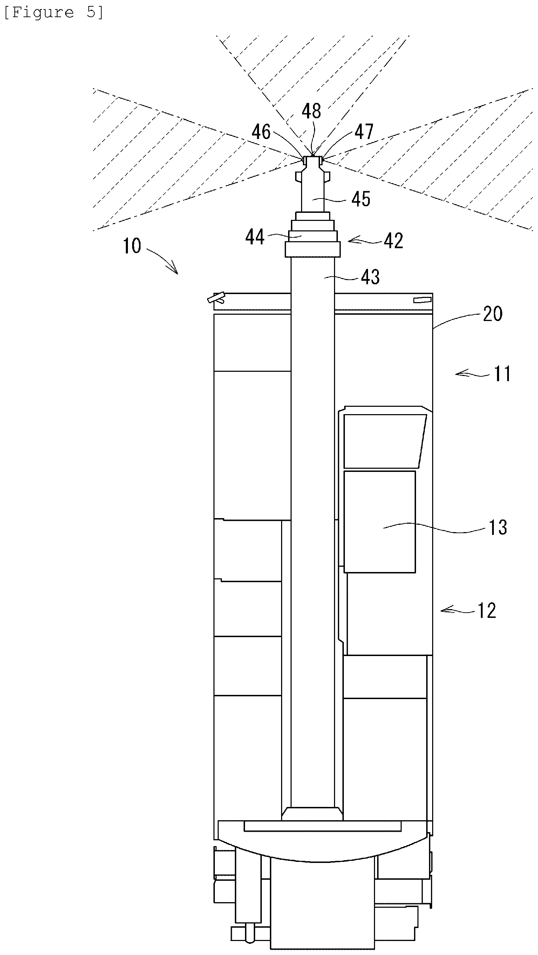

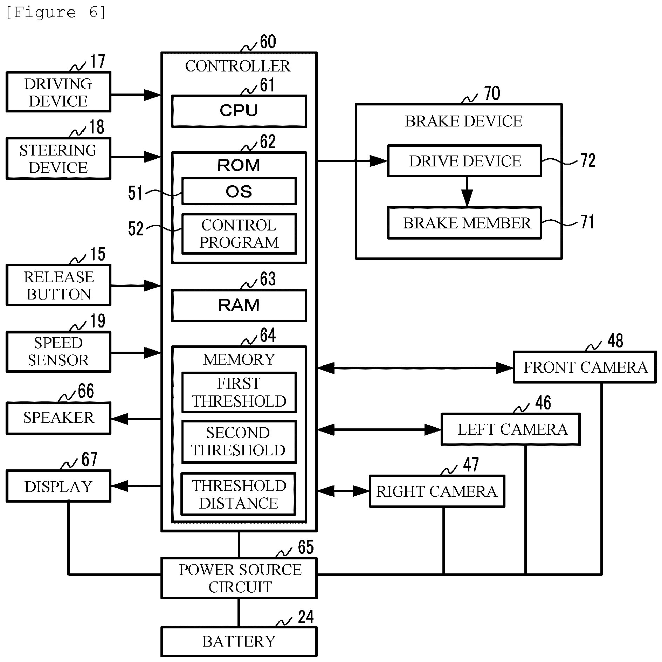

As shown in Figures. 5 and 6, the crane vehicle 10 according to the present modification further includes a front camera 48 in addition to the left and right cameras 46 and 47. The front camera 48 is fixed to a front surface of the tip end portion of the boom 42. A lens of the front camera 48 faces a front side of the crane vehicle 10. That is, the front camera 48 images the front side of the crane vehicle 10. A configuration of the front camera 48 is the same as a configuration of each of the left and right cameras 46 and 47. The front camera 48 is connected to the controller 60 using a cable. The front camera 48 may be provided at a lower surface, an upper surface, the left side surface, or the right side surface of the tip end portion of the boom 42 as long as the front camera 48 can image the front side with the lens facing forward.

In addition, the crane vehicle 10 includes a speed sensor 19. The speed sensor 19 periodically or constantly outputs a signal corresponding to a vehicle speed of the crane vehicle 10, for example, according to the driving of the engine. The speed sensor 19 is connected to the controller 60 using a cable (not shown). The signal output from the speed sensor 19 is input to the controller 60 via an interface. A configuration of the speed sensor 19 is already known, and thus a detailed description thereof is omitted.

Furthermore, the memory 64 of the controller 60 further stores a second threshold in addition to the first threshold and the threshold distance. The second threshold is a value corresponding to an uppermost position of the boom 42 or the jib 14 (Figure 1) attached to the boom 42. The second threshold may be set to different values depending on a case where the jib 14 is not attached to the boom 42 and a case where the jib 14 is attached to the boom 42, or may be set assuming that the jib 14 is mounted on the boom 42.

Further, the crane vehicle 10 includes a release button 15 (Figure 6). The release button 15 is provided in the cabin 13. The release button 15 outputs a release signal according to an operation performed by a driver. The release button 15 is connected to the controller 60 by a cable (not shown). As will be described later, the controller 60 stops the driving of the brake device 70 according to input of the release signal. That is, when the release button 15 is operated, the wheels 21 are released from the brake member 71, and the crane vehicle 10 can travel.

A configuration other than the front camera 48, the speed sensor 19, and the second threshold is the same as the configuration of the crane vehicle 10 described in the embodiment.

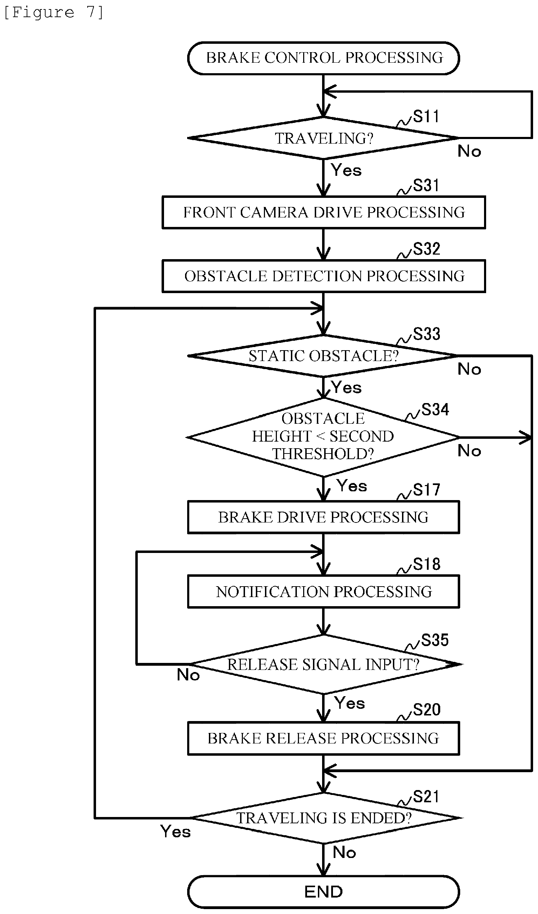

The controller 60 executes brake control processing shown in Figure 7 in addition to the brake control processing (Figure 4) described in the embodiment. The same processing as that of the embodiment is donated by the same reference numeral as that of the embodiment, and a description thereof is omitted.

As in the embodiment, the controller 60 determines whether or not the crane vehicle 10 is traveling (S11). When it is determined that the crane vehicle 10 is traveling (S11: Yes), the controller 60 executes front camera drive processing (S31). Specifically, the controller 60 supplies power to the front camera 48 and inputs a control signal to the front camera 48 to cause the front camera 48 to perform imaging. The front camera 48 which receives the control signal adjusts a focal length to perform imaging in the same manner as the left and right cameras 46 and 47, and outputs an obstacle distance and image data. The image data and the obstacle distance output from the front camera 48 are input to the controller 60. The controller 60 executes obstacle detection processing for detecting an obstacle by analyzing the received image data (S32). A method for detecting an obstacle on the front side is the same as a method for detecting obstacles on the left side and the right side.

The controller 60 determines whether or not a detected obstacle is a static obstacle. For example, when a change amount per unit time of the obstacle distance (that is, an obstacle approaching speed) received from the front camera 48 is substantially equal to a speed of the crane vehicle 10 (hereinafter, also referred to as a vehicle speed) indicated by the signal received from the speed sensor 19, the controller 60 determines that the detected obstacle is a static obstacle (S33: Yes). For example, when the obstacle approaching speed is within a range of the vehicle speed ± a threshold speed, the controller 60 determines that the obstacle approaching speed is substantially equal to the vehicle speed. The threshold speed is stored in the memory 64 in advance.

When it is determined that the detected obstacle is not a static obstacle (S33: No), the controller 60 skips processing of step S34, etc., and executes processing of step S21 as in the embodiment.

When it is determined that the detected obstacle is a static obstacle (S33: Yes), the controller 60 determines whether or not a height of a lowest point of the static obstacle from ground is less than the second threshold stored in the memory 64 (S34). That is, the controller 60 determines whether or not the crane vehicle 10 can pass below the static obstacle without contact between the static obstacle and the boom 42. Such determination processing is not necessary for a vehicle such as a normal vehicle whose vehicle height is overwhelmingly lower than that of the crane vehicle 10.

When it is determined that the height of the lowest point of the static obstacle from the ground is not less than the second threshold stored in the memory 64 (S34: No), that is, when it is determined that the boom 42 is not coming into contact with the static obstacle, the controller 60 skips processing of steps S17 to S20, and executes processing of step S21.

When it is determined that the height of the lowest point of the static obstacle from the ground is less than the second threshold (S34: Yes), that is, when it is determined that the boom 42 is coming into contact with the static obstacle, the controller 60 executes the brake drive processing of driving the brake device 70 (S17). Thereafter, the controller 60 executes the processing of step S18 as in the embodiment.

After executing the notification processing of step S18, the controller 60 determines whether or not a release signal is received from the release button 15 (S35). That is, the controller 60 determines whether or not the driver operates the release button 15. The controller 60 continuously executes the notification processing until the release signal is input (S35: No).

When it is determined that the release signal is input (S35: Yes), the controller 60 executes the brake release processing (S20) in the same manner as in the embodiment. After executing the brake release processing, the controller 60 executes the processing of step S21 in the same manner as in the embodiment, and ends the brake control processing.

### [Operation and Effect of Modification]

When it is determined that a static obstacle in front of the vehicle body 20 such as an elevated structure is coming into contact with the boom 42, the controller 60 drives the brake device 70 to stop the vehicle body 20. Therefore, the crane vehicle 10 can travel safely by preventing contact between the static obstacle such as the elevated structure and the boom 42.

The controller 60 may determine whether or not an obstacle in front of the vehicle body 20 is a moving obstacle such as another vehicle. In this case, the controller 60 may drive the brake device 70 according to the moving obstacle approaching within a threshold safety distance. The threshold safety distance is, for example, 2 m to 10 m, and is stored in the memory 64 in advance.

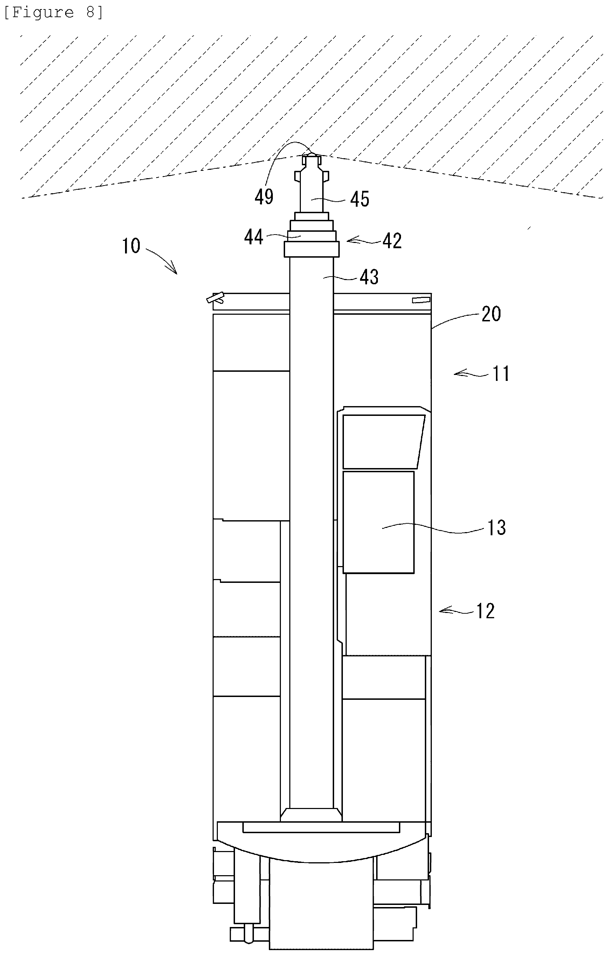

In addition, as shown in Figure 8, instead of the cameras 46, 47, and 48 (Figure 5), a camera 49 having a wide-angle lens capable of imaging the left side, the right side, and the front side may be provided at the tip end portion of the boom 42. Further, instead of providing the front camera 48, each of the left and right cameras 46 and 47 may have a wide-angle lens capable of imaging up to the front side of the vehicle body 20.

### [Other Modifications]

In the embodiments described above, the cameras 46 and 47 that output the image data and the distance data are described as an example of the sensor. However, the sensor may be an ultrasonic sensor, a radar, or the like. When a two-dimensional sensor such as an ultrasonic sensor that can measure a distance to an obstacle but cannot measure a height or a size of the obstacle is used, a plurality of two-dimensional sensors may be used. For example, a first two-dimensional sensor (such as an ultrasonic sensor) is provided such that a direction along a horizontal direction is a detection direction, and the other one or a plurality of two-dimensional sensors are provided such that detection directions are shifted in vertical and horizontal directions with respect to the first two-dimensional sensor. By using the plurality of two-dimensional sensors, the height, the size, and the like of the obstacle can be detected in addition to the distance to the obstacle. When the brake device 70 is driven according to the distance to the obstacle being less than the threshold distance, only the distance to the obstacle may be measured by one two-dimensional sensor (such as an ultrasonic sensor).

In the embodiments and the modifications described above, an example is described in which the controller 60 executes the brake control processing shown in Figure 4 according to the traveling of the crane vehicle 10. However, the controller 60 may execute the brake control processing shown in Figure 4 according to the crane vehicle 10 entering an intersection. For example, the controller 60 analyzes image data received from the front camera 48, and determines whether or not the crane vehicle 10 enters an intersection.

In the embodiments and the modifications described above, an example is described in which the obstacle distance is detected using the distance measuring sensors provided in the cameras 46, 47, and 48. However, in addition to the cameras 46, 47, and 48, a distance measuring sensor may be provided at the tip end portion of the boom 42.

In the first embodiment described above, an example is described in which the notification processing is executed in step S18 after the brake device 70 is driven in step S17. However, the brake device 70 may be driven after the notification processing is executed. That is, the driver may be notified that the brake device 70 is to be driven, before the brake device 70 is driven.

In the first embodiment described above, an example is described in which both the brake drive processing (S17) and the notification processing (S18) are executed. However, only one of the brake drive processing and the notification processing may be executed.

In the second embodiment described above, an example is described in which the notification device drive processing (step 41 in Figure 10) in which the lighting device 68 or the horn 69 is driven is executed instead of the brake drive processing (step S17 in Figure 4) in the first embodiment. However, the notification device drive processing may be executed together with the brake drive processing. In this case, driving of the lighting device 68 or the horn 69 may be executed before the driving of the brake device 70 or after the driving of the brake device 70.

In the second embodiment described above, an example is described in which the notification device drive processing (step 41 in Figure 10) in which the lighting device 68 or the horn 69 is driven is executed instead of the notification processing (S18 in Figure 4) in the first embodiment. However, the notification device drive processing may be executed together with the notification processing (S18 in Figure 4).

In the embodiments and the modifications described above, an example is described in which the cameras 46, 47, and 48 are provided at the tip end portion of the boom 42. However, the cameras 46, 47, and 48 may not be provided directly on the tip end portion of the boom 42 as long as the cameras 46, 47, and 48 are provided at positions corresponding to the tip end portion of the boom 42. For example, the cameras 46 and 47 may be provided at a member extending from the base end boom 43 toward the tip end portion of the boom 42.

### Reference Signs List

- 10: Crane vehicle
- 20: Vehicle body
- 21: Wheel
- 42: Boom
- 46: Left camera
- 47: Right camera
- 48: Front camera
- 49: Camera
- 60: Controller
- 64: Memory
- 68: Lighting device
- 69: Horn
- 70: Brake device
- 71: Brake member
- 72: Drive device

## Claims

1. A work vehicle comprising:
a vehicle body (20) including a wheel (21);
a boom (42) protruding forward from a front end of the vehicle body (20);
a brake device (70) configured to apply a braking force to the wheel (21); and
a controller (60) configured to drive the brake device (70) based on detection data received from a sensor
**characterized in that**
the sensor is provided at a position corresponding to a tip end portion of the boom (42), and configured to detect an obstacle on a lateral side of the tip end portion;
the sensor recovering at least on the left side and on the right side of the tip end portion of the boom (42) is configured to detect an obstacle when the work vehicle enters an intersection, and
the controller (60) is configured to determine whether or not a detected obstacle is approaching the tip end portion of the boom (42) based on the detection data, and drive the brake device (70) according to a determination that the detected obstacle is approaching the tip end portion.

2. The work vehicle according to claim 1, wherein
the controller (60) includes a memory (64), and
the controller (60) is configured to determine, based on the detection data, whether or not a detected height of a detected obstacle is equal to or greater than a first threshold stored in the memory (64), and drive the brake device (70) according to the detected height being equal to or greater than the first threshold.

3. The work vehicle according to any one of claims 1 to 2, wherein
the controller (60) includes a memory (64), and
the controller (60) is configured to determine, based on the detection data, whether or not a detected distance to a detected obstacle is less than a threshold distance stored in the memory (64), and drive the brake device (70) according to the detected distance being less than the threshold distance.

4. The work vehicle according to any one of claims 1 to 3, wherein
the controller (60) is configured to stop driving of the brake device (70) according to at least one of facts that the sensor no longer detects an obstacle, and an obstacle detected by the sensor moves away.

5. The work vehicle according to any one of claims 1 to 4, further comprising:
a notification device, wherein
the controller (60) is configured to cause the notification device to issue a notification according to a determination that the brake device (70) is to be driven.

6. The work vehicle according to any one of claims 1 to 5, further comprising:
a sensor configured to detect an obstacle in front of the vehicle body (20), wherein
the controller (60) includes a memory (64), and
the controller (60) is configured to drive the brake device (70) according to a height position of a lowest point of an obstacle in front of the vehicle body (20) detected by the sensor being less than a second threshold stored in the memory (64).

## Patentansprüche

1. Ein Arbeitsfahrzeug, das Folgendes aufweist:
- einen Fahrzeugkörper (20), der ein Rad (21) aufweist;
- einen Ausleger (42), der ausgehend von einem vorderen Ende des Fahrzeugkörpers (20) nach vorne vorsteht;
- eine Bremsvorrichtung (70), die dafür konfiguriert ist, dass sie eine Bremskraft auf das Rad (21) anwendet; und
- eine Steuerung (60), die dafür konfiguriert ist, dass sie die Bremsvorrichtung (70) auf der Basis von Detektions-Daten antreibt, die von einem Sensor empfangen worden sind,
**dadurch gekennzeichnet, dass**
- der Sensor an einer Position, die einem Spitzen-Endteil des Auslegers (42) entspricht, angeordnet ist und dafür konfiguriert ist, dass er ein Hindernis auf einer lateralen Seite des Spitzen-Endteils erkennt;
- der Sensor, der mindestens die linke Seite und die rechte Seite des Spitzen-Endteils des Auslegers (42) abdeckt, dafür konfiguriert ist, dass er ein Hindernis dann erkennt, wenn das Arbeitsfahrzeug in eine Kreuzung einfährt, und
- die Steuerung (60) dafür konfiguriert ist, dass sie auf der Basis der Detektions-Daten bestimmt, ob sich ein detektiertes Hindernis dem Spitzen-Endteil des Auslegers (42) nähert oder nicht, und dass sie die Bremsvorrichtung (70) gemäß einer Bestimmung ansteuert, dass sich das detektierte Hindernis dem Spitzen-Endteil nähert.

2. Das Arbeitsfahrzeug gemäß dem Anspruch 1, bei dem
- die Steuerung (60) einen Speicher (64) aufweist, und
- die Steuerung (60) dafür konfiguriert ist, dass sie auf der Basis der Detektions-Daten bestimmt, ob eine detektierte Höhe eines detektierten Hindernisses gleich oder größer als eine erste Schwelle, die in dem Speicher (64) gespeichert ist, ist oder nicht, und dass sie die Bremsvorrichtung (70) in Übereinstimmung damit ansteuert, dass die detektierte Höhe gleich oder größer als die erste Schwelle ist.

3. Das Arbeitsfahrzeug gemäß irgend einem der Ansprüche Anspruch 1 bis 2, bei dem
- die Steuerung (60) einen Speicher (64) aufweist und
- die Steuerung (60) dafür konfiguriert ist, dass sie auf der Basis der Detektions-Daten bestimmt, ob eine detektierte Distanz zu einem detektierten Hindernis kleiner als eine Schwellen-Distanz, die in dem Speicher (64) gespeichert ist, ist oder nicht, und dass sie die Bremsvorrichtung (70) in Übereinstimmung damit ansteuert, dass die detektierte Distanz kleiner als die Schwellen-Distanz ist.

4. Das Arbeitsfahrzeug gemäß irgend einem der Ansprüche Anspruch 1 bis 3, bei dem
- die Steuerung (60) dafür konfiguriert ist, dass sie das Ansteuern der Bremsvorrichtung (70) in Übereinstimmung damit stoppt, dass mindestens einer der folgenden Sachverhalte zutrifft: dass der Sensor nicht länger ein Hindernis detektiert, und dass ein Hindernis, das von dem Sensor detektiert worden ist, sich wegbewegt.

5. Das Arbeitsfahrzeug gemäß irgend einem der Ansprüche Anspruch 1 bis 4, das des Weiteren das Folgende aufweist:
- eine Benachrichtigungs-Vorrichtung,
wobei
- die Steuerung (60) dafür konfiguriert ist, dass sie veranlasst, dass die Benachrichtigungs-Vorrichtung eine Benachrichtigung in Übereinstimmung mit einer Bestimmung ausgibt, dass die Bremsvorrichtung (70) angetrieben werden soll.

6. Das Arbeitsfahrzeug gemäß irgend einem der Ansprüche Anspruch 1 bis 4, das des Weiteren das Folgende aufweist:
- einen Sensor, der dafür konfiguriert ist, dass er ein Hindernis detektiert, das sich vor dem Fahrzeugkörper (20) befindet,
wobei
- die Steuerung (60) einen Speicher (64) aufweist und
- die Steuerung (60) dafür konfiguriert ist, dass sie die Bremsvorrichtung (70) in Übereinstimmung damit ansteuert, dass eine Höhe eines niedrigsten Punktes eines Hindernisses, das sich vor dem Fahrzeugkörper (20) befindet und das von dem Sensor detektiert worden ist, kleiner ist als eine zweite Schwelle, die in dem Speicher (64) gespeichert ist.

## Revendications

1. Véhicule de travail comprenant
un corps de véhicule (20) comprenant une roue (21) ;
une flèche (42) faisant saillie à l'avant du corps de véhicule (20) ;
un dispositif de freinage (70) configuré pour appliquer une force de freinage à la roue (21) ; et
un contrôleur (60) configuré pour commander le dispositif de freinage (70) dur la base des données de détection reçues d'un capteur
**caractérisé en ce que**
le capteur est prévu à une position correspondant à une partie de l'extrémité de la flèche (42), et configuré pour détecter un obstacle sur un côté latéral de la partie de l'extrémité de la flèche ;
le capteur recouvrant au moins le côté gauche et le côté droit de la partie d'extrémité de la flèche (42) est configuré pour détecter un obstacle lorsque le véhicule de travail entre dans une intersection, et
le contrôleur (60) est configuré pour déterminer si un obstacle détecté s'approche ou non de la partie de l'extrémité de la flèche (42) sur la base des données de détection, et pour actionner le dispositif de freinage (70) en fonction de la détermination que l'obstacle détecté s'approche de la partie de l'extrémité.

2. Véhicule de travail selon la revendication 1, dans lequel
le contrôleur (60) comprend une mémoire (64), et
le contrôleur (60) est configuré pour déterminer, sur la base des données de détection, si la hauteur détectée d'un obstacle détecté est égale ou supérieure à un premier seuil stocké dans la mémoire (64), et pour actionner le dispositif de freinage (70) en fonction de la hauteur détectée qui est égale ou supérieure au premier seuil.

3. Véhicule de travail selon l'une des revendications 1 à 2, dans lequel
le contrôleur (60) comprend une mémoire (64), et
le contrôleur (60) est configuré pour déterminer, sur la base des données de détection, si une distance détectée par rapport à un obstacle détecté est inférieure à une distance seuil stockée dans la mémoire (64), et pour actionner le dispositif de freinage (70) si la distance détectée est inférieure à la distance seuil.

4. Véhicule de travail selon l'une des revendications 1 à 3, dans lequel
le contrôleur (60) est configuré pour arrêter la conduite du dispositif de freinage (70) en fonction d'au moins un des faits que le capteur ne détecte plus d'obstacle et l'obstacle détecté par le capteur s'éloigne.

5. Véhicule de travail selon l'une des revendications 1 à 4, comprenant en outre :
un dispositif de notification, dans lequel
le contrôleur (60) est configuré pour que le dispositif de notification émette une notification après avoir déterminé que le dispositif de freinage (70) doit être actionné.

6. Véhicule de travail selon l'une des revendications 1 à 5, comprenant en outre :
un capteur configuré pour détecter un obstacle devant le corps du véhicule (20), dans lequel
le contrôleur (60) comprend une mémoire (64), et
le contrôleur (60) est configuré pour actionner le dispositif de freinage (70) en fonction d'une position en hauteur du point le plus bas d'un obstacle devant la carrosserie du véhicule (20) détectée par le capteur et inférieure à un second seuil stocké dans la mémoire (64).
